# EUROPEAN PATENT SPECIFICATION

(11) **EP 3 075 629 B1**
(45) Date of publication and mention of the grant of the patent: **22.11.2017**
(21) Application number: 16160841.9
(22) Date of filing: 17.03.2016
(51) Int. Cl.: B62D 1/184, B62D 1/19

(54) **STEERING COLUMN DEVICE**
LENKSÄULENVORRICHTUNG
DISPOSITIF DE COLONNE DE DIRECTION

(30) Priority: 31.03.2015 JP 2015070660
(43) Date of publication of application: 05.10.2016
(73) Proprietor: FUJI KIKO Co., Ltd., Kosai-shi, Shizuoka 431-0431 (JP)
(72) Inventor: UESAKA, Yota, Kosai-shi, Shizuoka 431-0431 (JP)
(74) Representative: Grünecker Patent- und Rechtsanwälte PartG mbB

(56) References cited:
- WO-A1-2009/147325

## Description

### Technical Field

The present application relates to a steering column device that, when a vehicle has a secondary collision of an impact accident, allows a steering column to move together with a steering shaft, forward of the vehicle in excess of a telescopic adjustment range by the impact load.

### Background Art

This kind of steering column device as a conventional example includes a lower jacket fixed on the side of a vehicle body, an upper jacket arranged movably in the lower jacket in a vehicle longitudinal direction (telescopic direction), a lock mechanism fastening the upper jacket to the lower jacket, and an impact absorbing mechanism that, when an impact accident causes a secondary collision where a passenger collides with a steering wheel, absorbs the impact energy. The adjustment range in the position of the upper jacket in the vehicle longitudinal direction (telescopic-position adjustment range) is defined since a stopper provided in the upper jacket moves in a slot opened in the lower jacket.

The lock mechanism includes a pair of clamp parts provided on both sides of a slit, which is provided in the lower jacket so as to extend in a cylinder-axis direction, to reduce the diameter of the slit thereby fastening the upper jacket, a lock plate equipped with an adjustment bolt for fastening this pair of clamp parts and installed on the upper jacket, and a lock member arranged between the pair of clamp parts and installed on the adjustment bolt.

The lock plate is constructed in the form of a ladder having a plurality of lock holes and separably installed on the upper jacket through a shear pin.

Together with the adjustment bolt, the lock member rotates about its axis to engage with/disengaged from the lock holes.

At the secondary collision, if a load exceeding a set value (e.g. fastening force of the lower jacket) is applied to the upper jacket, the shear pin is fractured, so that the upper jacket moves forward while leaving the lock plate in engagement with the lock member. Then, an energy absorbing member provided between the lock plate and an upper column is deformed to absorb the impact energy. Furthermore, when the upper jacket moves forward, the stopper is separated from the upper jacket, so that it moves in excess of the telescopic range.

### Summary

In the steering column device of the conventional example described in Patent Document 1 (WO 2009/147325 A1), the rotation of the upper jacket around the cylinder axis is restricted since the stopper moves in the slot. Consequently, when the telescopic position of the upper jacket is adjusted, the lock plate moves in confrontation with the lock member.

However, as it is necessary to provide the slot and the stopper in addition to the lock mechanism, this steering column device has a problem that its structure is complicated.

In consideration of the above-mentioned situation, an object of the present application is to provide a steering column device which allows a lock plate to move in confrontation with a lock member without complicating its structure.

A steering column device according to an aspect of the present application includes: a lower jacket having a cylindrical shape and arranged in a vehicle longitudinal direction; a slit penetrating through a cylinder wall of the lower jacket along a cylinder-axis direction of the lower jacket; a pair of clamp parts formed so as to stand on both marginal parts of the slit; an upper jacket having a cylindrical shape and inserted into the lower jacket movably in the cylinder-axis direction; a lock plate fixed on an outer circumferential face of the upper jacket and inserted into the slit movably in the cylinder-axis direction, the lock plate having a plurality of lock holes opened along the cylinder-axis direction successively; an operating shaft arranged so as to penetrate through the pair of clamp parts; an operating lever arranged on the operating shaft to allow the operating shaft to be rotated about an axis of the operating shaft; a cam member arranged on the operating shaft so as to rotate together with the operating shaft; a lock supporting shaft arranged in the pair of clamp parts, in parallel with the operating shaft; a lock member rotatably supported by the lock supporting shaft while cooperating with the cam member, the lock member being inserted into and removed from the lock hole in association with the rotating operation of the operating shaft; a pair of stoppers formed so as to stand radially outward from respective ends of the lock plate in the cylinder-axis direction and adapted so as to be capable of abutting on the lock member, thereby defining a telescopic-position adjustment range when the upper jacket moves in the cylinder-axis direction; and a guide member made of resin material and arranged on the lock plate so as to extend in parallel with the cylinder-axis direction, the guide member including a pair of guide rails between which the lock member is pinched in the axial direction of the lock supporting shaft. By rotating the operating lever about its axis in a fastening direction, an interval between the pair of clamp parts is narrowed, so that the upper jacket is fastened to the lower jacket.

Since the inner edge parts of the guide rails are formed so as to extend along the cylinder-axis direction while abutting on the right side face and the left side face of the lock-hole engaging arm part along the cylinder-axis direction respectively, the engagement projection of the lock member is prevented from being shifted to the axial direction of the operating shaft without disturbing the movement of the upper jacket in the cylinder-axis direction and thus, the engagement projection is held in a position enabling it to be engaged with the lock hole of the lock plate.

The guide member may include noise reduction parts arranged along respective inner faces of the stoppers so as to be abuttable on the lock member.

By arranging the noise reduction parts along the inner faces of the stopper, it is possible to alleviate impact noise caused by collision of the stoppers with the lock member in adjusting the telescopic position of the upper jacket.

The steering column device may further include an assembling mechanism including an engagement part provided in the guide member and an engagement receiving part provided in the lock plate, wherein the guide member is assembled to the lock plate since the engagement part is engaged with the engagement receiving part.

As the guide member is assembled to the lock plate with the aid of the assembling mechanism, it is possible to improve the assembling workability of the guide member.

### Brief Description of Drawings

Fig. 1 is a left side view of a steering column device according to an embodiment.
Fig. 2 is a bottom view of the steering column device according to the embodiment.
Fig. 3 is a sectional view along a line III-III of Fig. 1.
Fig. 4 is a sectional view along a line IV-IV of Fig. 1.
Fig. 5 is a sectional view illustrating a telescopic-position restricting mechanism of the steering column device according to the embodiment.
Fig. 6 is a perspective view illustrating the telescopic-position restricting mechanism of the steering column device according to the embodiment.

### Description of Embodiments

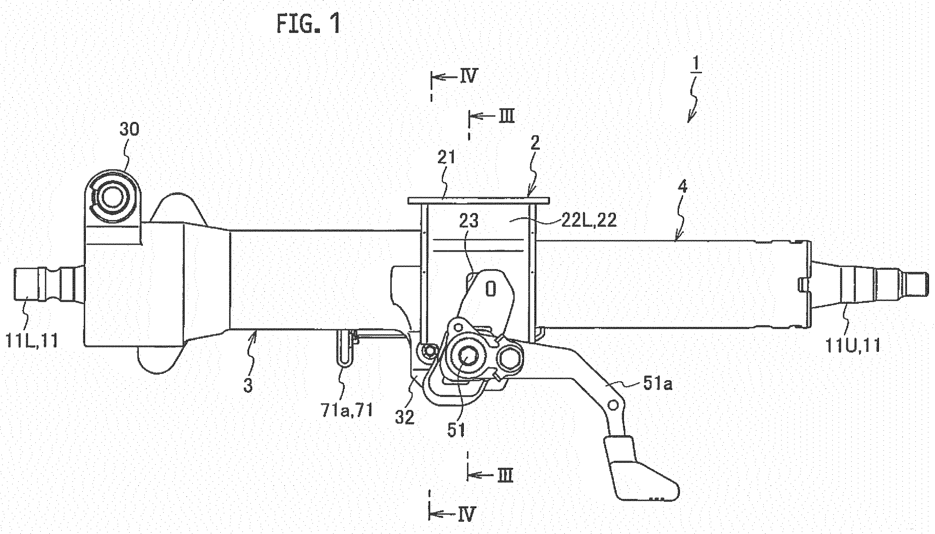

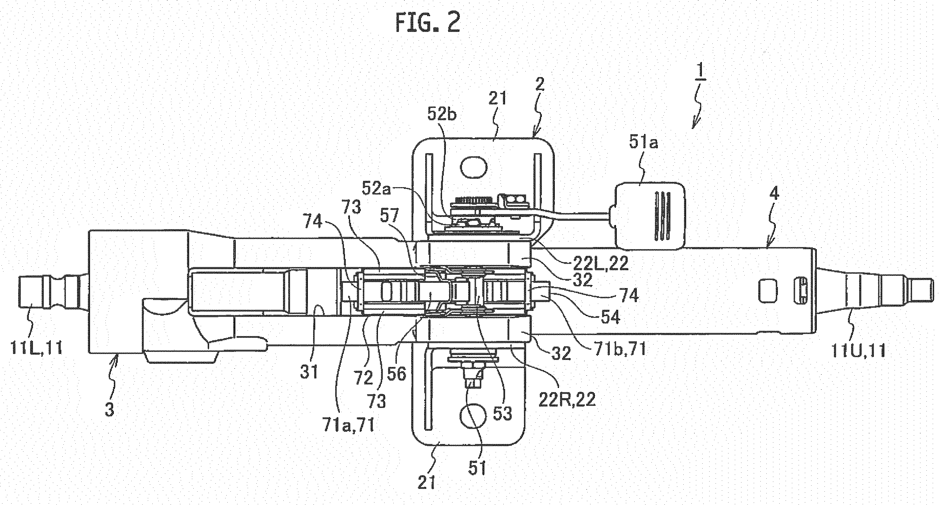

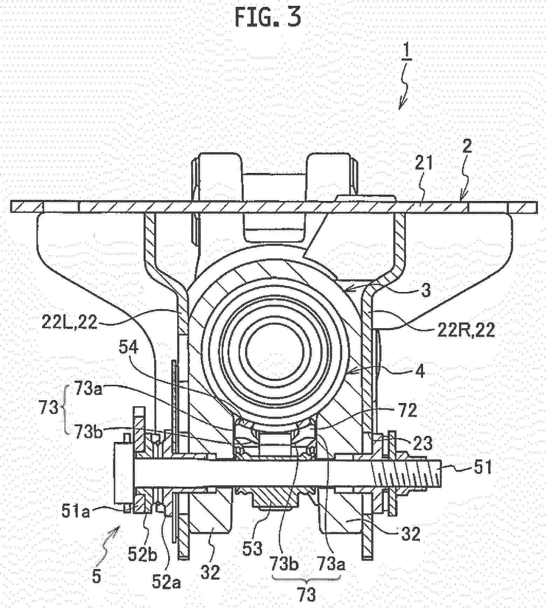

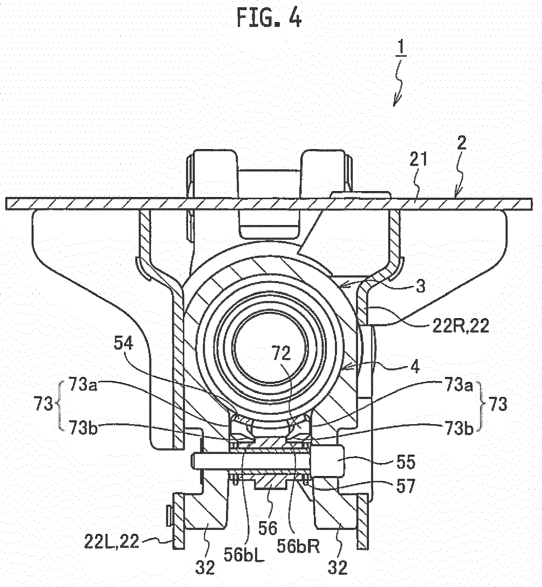

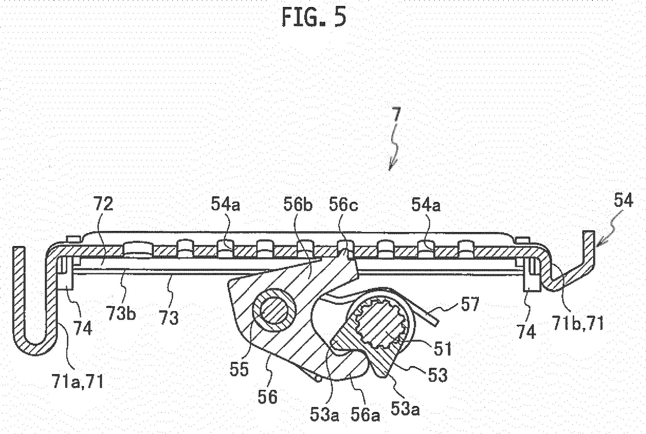

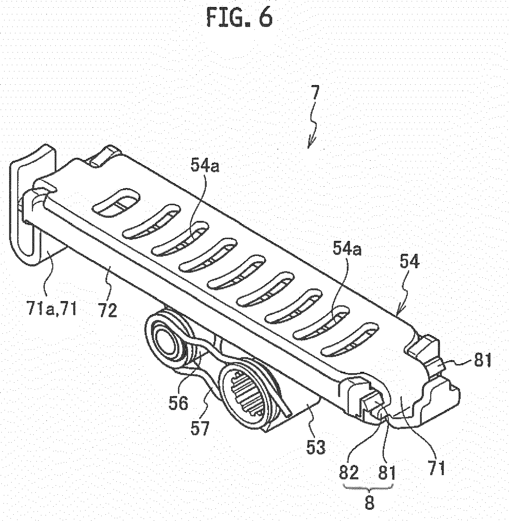

An embodiment will be described with reference to the drawings. As illustrated in Figs. 1 to 6, a steering column device 1 according to the embodiment is a manual type steering column device. The steering column device 1 according to the embodiment includes an attachment bracket 2 for fixing the steering column device I to a vehicle body, a lower jacket 3 which is supported to the attachment bracket 2 so as to be swingable (capable of adjusting its tilt position) in a vehicle vertical direction, an upper jacket 4 which is supported to the lower jacket 3 so as to be movable (capable of adjusting its telescopic position) in a vehicle longitudinal direction, a lock mechanism 5 which fastens the attachment bracket 2, the lower jacket 3, and the upper jacket 4 integrally, and a telescopic-position restricting mechanism 7 capable of setting an adjustment range of the telescopic position of the upper jacket 4 to the lower jacket 3 in the vehicle longitudinal direction.

The attachment bracket 2 includes an attachment body 21 fixed on a ceiling surface (not illustrated) of the vehicle body and a pair of hanging parts 22 hanging from the attachment body 21. In each of the hanging parts 22, a tilt slot 23 is opened to define the tilt-position adjustment range along the vehicle vertical direction (tilt direction). The tilt slot 23 is constituted by a circular elongated hole whose center is positioned at a tilt shaft (not illustrated) supporting a pivot part 30.

The lower jacket 3 has a cylindrical shape and is arranged between the pair of hanging parts 22 to extend along the vehicle longitudinal direction. The lower jacket 3 includes the pivot part 30 at its upper marginal portion on the front-end side. Since the pivot part 30 is pivotally supported by the ceiling surface of the vehicle body through the tilt shaft (not illustrated), the rear-end side of the lower jacket 3 can swing in the vehicle vertical direction. The lower jacket 3 is provided with a slit 31 which penetrates through the lower face of a cylinder wall 3a and extends from a rear edge of the outer column 3 along a cylinder-axis direction. A pair of clamp parts 32 are formed so as to stand on both marginal parts of the slit 31 along the cylinder-axis direction. The pair of clamp parts 32 are positioned on the rear-end side of the slit 31 and formed to stand on outer-column's portions opposed to respective inner faces of the hanging parts 22 along the vehicle vertical direction. An operating shaft 51 penetrates through both of the clamp parts 32 rotatably about an axis. A lock supporting shaft 55 is stretched in respective portions of the clamp parts 32 in front of the operating shaft 51.

The upper jacket 4 has a cylindrical shape and is inserted into the cylinder of the lower jacket 3 movably therein in the cylinder-axis direction. A steering shaft 11 is rotatably supported in respective cylinders of the upper jacket 4 and the lower jacket 3. The steering shaft 11 includes a lower shaft 11L rotatably supported in the lower jacket 3 and an upper shaft 11U rotatably supported in the upper jacket 4. By spline-connecting the upper shaft 11U and the lower shaft 11L to each other, the steering column device 1 is constructed so that the upper shaft 11U and the lower shaft 11L rotate around their axes integrally and that the upper shaft 11U is movable to the lower shaft 11L in the axial direction.

The lock mechanism 5 includes an operating lever 51a, the operating shaft 51, a stationary cam 52a, a rotational cam 52b, a V-shaped cam 53 (cam member), a lock member 56, and a lock plate 54. In connection, all of the operating shaft 51, the V-shaped cam 53, the lock member 56, and the lock plate 54 constitute a telescopic lock mechanism.

The operating shaft 51 has a shaft shape. The operating shaft 51 penetrates through the tilt slots 23 of both hanging parts 22 and both clamp parts 32 of the lower jacket 3 along a vehicle width direction and is rotatably supported around the axis of the shaft. A washer engaging with an outer face of the right-side hanging part 22R is fixed to one end of the operating shaft 51 (on one-end side) by a nut, through a thrust bearing. On the other end of the operating shaft 51 (on another-end side), the stationary cam 52a, the rotational cam 52b, and the operating lever 51a are disposed between a head part provided integrally with the operating shaft 51 and an outer face of the left-side hanging part 22L. On a portion of the operating shaft 51 between the stationary cam 52a and the left-side hanging part 22L, there are arranged, in order from the side of the left-side hanging part 22L, a washer and a friction plate which has one end locked to the left-side hanging part 22L and an elongated hole formed along the tilt slot 23. On a portion of the operating shaft 51 between the clamp parts 22, the V-shaped cam 53 is arranged so as to be rotatable integrally with the operating lever 51a.

The stationary cam 52a is formed with a wide circular shape. The operating shaft 51 is arranged so as to penetrate through the center of the wide circular shape. The stationary cam 52a is arranged so that its stationary cam face faces the side of the operating lever 51a. With the back side of the stationary cam face fitted into the tilt slot 24, additionally, the stationary cam 52a is arranged so as not to rotate around the operating shaft 51. Instead, the stationary cam 52a is arranged so as to be movable in the tilt slot 24 vertically. On the stationary cam face of the stationary cam 52a, crest parts and trough parts are formed in the circumferential direction alternately.

The rotational cam 52b is formed with a wide circular shape. The operating shaft 51 is also arranged so as to penetrate through the center of the wide circular shape. The rotational cam 52b is arranged so that its rotational cam face faces the stationary cam face of the stationary cam 52a. The rotational cam 52b is joined to the operating lever 51a so as to be rotatable integrally with the lever 51a. Additionally, the rotational cam 52b is assembled to the operating shaft 51 so as to rotate together with the operating shaft 51 penetrating through the rotational cam 52b, around the axis of the operating shaft 51. On the rotational cam face of the rotational cam 52b, crest parts and trough parts are formed in the circumferential direction alternately.

In order that the V-shaped cam 53 rotates together with the operating shaft 51 around the axis, the operating shaft 51 is inserted and fitted into the V-shaped cam 53 by serration engagement or variant fitting. The V-shaped cam 53 includes a pair of cam projections 53a formed so as to project in the radial direction respectively, thereby providing a substantially V-shaped profile.

The lock supporting shaft 55 penetrates through the lock member 56. The lock member 56 is axially supported on the lock supporting shaft 55 rotatably around the axis of the lock supporting shaft 55. The lock member 56 includes a cam-associating arm part 56a and a lock-hole engaging arm part 56b formed so as to extend in the radial direction respectively, thereby providing a substantially V-shaped profile. The lock member 56 is urged and held in a direction to engage an engagement projection 56c of the lock-hole engaging arm part 56b in the lock hole 54a projection 56c engageable with the lock hole 54a is formed so as to protrude toward the lock plate 54.

The lock plate 54, which is constituted by a strip-shaped plate material curved in the vehicle width direction circularly, is arranged on the outer circumferential face of the upper jacket 4 along the cylinder-axis direction. In the lock plate 54, a plurality of lock holes 54a are opened continuously in the longitudinal direction, thereby providing a ladder-shaped profile.

The telescopic-position restricting mechanism 7 includes the lock member 56, a pair of stoppers 71, and a guide member 72.

The stoppers 71 are formed so as to stand from the front and rear ends of the lock plate 54 in the cylinder-axis direction radially outward of the upper jacket 4, respectively. The dimensions of each stopper 71 are set so that, when the upper jacket 4 moves in the cylinder-axis direction, the stopper 71 can abut on the lock member 56. That is, the telescopic-position adjustment range is set by an interval between the front-side stopper 71a and the rear-side stopper 71b.

The guide member 72 is made of a resin material having elasticity. The guide member 72 has a frame shape surrounding the lock plate 54 by a pair of guide rails 73 and a pair of noise reduction parts 74. The guide member 72 and the lock plate 54 are assembled so as to overlap each other through an assembling mechanism 8.

In the guide rails 73, their respective outer edge parts 73a are formed so as to extend along the cylinder-axis direction while abutting on the marginal parts of the slit 31 along the cylinder-axis direction. In other words, the guide member 72 is arranged so that, when the lock mechanism 5 is in the fastening position, the width of the silt 31 is filled with the guide member 72. Also in the guide rails 73, their respective inner edge parts 73b are formed as elastic projections so as to extend in parallel with each other along the cylinder-axis direction while abutting on a right side face 56bR and a left side face 56bL of the lock-hole engaging arm part 56b along the cylinder-axis direction respectively. Namely, the guide rails 73 are arranged in parallel with each other along the cylinder-axis direction while abutting on respective ends of the lock member 56 in the axial direction of the lock supporting shaft 55.

Each of the noise reduction parts 74 is positioned on an inner face of the stopper 71 and adapted so as to be capable of abutting on the lock member 56 when the upper jacket 4 moves in the cylinder-axis direction.

The assembling mechanism 8 includes engagement parts 81 of elastic pieces, which are formed integrally with the guide member 72 in left and right positions of the noise reduction part 74, and engagement receiving parts 82 projecting from the stopper 71 of the lock plate 54 to right and left directions. Since the engagement parts 81 are engaged with the engagement receiving parts 82, the guide member 72 is assembled to the lock plate 54.

Next, the operating sequence of the steering column device 1 according to the embodiment will be described.

In order to fix the upper jacket 4 in a desired position, it is firstly performed to move the upper jacket 4 in both the tilt direction (vehicle vertical direction) and the telescopic direction (vehicle longitudinal direction) for the desired position while cancelling the fastening state between the upper jacket 4 and the lower jacket 3. Then, the operating lever 51a is swingably operated upward. With the operating lever 51a swingably operated upward, the operating shaft 51 is rotated about the axis in the fastening direction.

As the rotational cam 52b integrated with the operating lever 51a is rotated in the fastening direction together with the operating shaft 51, the crest parts of the stationary cam 52a and the crest parts of the rotational cam 52b overlaps each other, so that the axial dimension of the stationary cam 52a and the rotational cam 52b is expanded. Consequently, the operating shaft 51 is pulled toward the rotational cam 52b, so that the hanging parts 22 and the clamp parts 32 are brought into pressure contact with each other and additionally, the lower jacket 3 is maintained in an arbitrary tilt position. Simultaneously, with the interval between the pair of clamp parts 32 narrowed, the diameter of the lower jacket 3 is reduced, so that the upper jacket 4 is maintained in an arbitrary telescopic position.

With the rotation of the operating shaft 51 in the fastening direction, when the V-shaped cam 53 is rotated to cancel the pressing of the cam projections 53a against the cam-associating arm part 56a, the lock member 56 is rotated due to urging force of the urging spring 57 cooperatively, so that the engagement projection 56c is pressed against the lock plate 54. Consequently, the engagement projection 56c is engaged with any lock hole 54a. Alternatively, when the engagement projection 56c is positioned in a lock plate's portion between the adjoining lock holes 54a, the lock member 56 comes to a stop while the engagement projection 56c is abutting on the lock plate's portion between the lock holes 54a.

In order to adjust the position of the upper jacket 4, the fastening state between the upper jacket 4 and the lower jacket column 3 is cancelled. For this purpose, it is first performed to swing the operating lever 51a downward (i.e. in the canceling direction). By operating to swing the operating lever downward, the operating shaft 51 rotates about its axis in the direction to cancel the fastening state.

Since the rotational cam 52b integrated with the operating lever 51a is rotated together with the operating shaft 51 in the direction to cancel the fastening state, the crest parts of the stationary cam 52a and the trough parts of the rotational cam 52b overlaps each other to cause the axial dimension of the stationary cam 52a and the rotational cam 52b to be reduced. Consequently, the operating shaft 51 is loosened so as to cancel the pressure contact between the hanging parts 22 and the clamp parts 32, so that the lower jacket 3 becomes possible to move to the attachment bracket 2 in the tilt direction (vehicle vertical direction) and additionally, the interval between the pair of clamp parts 32 is expanded to cause the diameter of the outer column 3 to be enlarged. As a result, the upper jacket 4 becomes possible to move in the telescopic direction (vehicle longitudinal direction).

In the telescopic lock mechanism, with the rotation of the operating shaft 51 in the direction to cancel the fastening state, the V-shaped cam 53 is rotated to cause the cam projections 53a to push the cam-associating arm part 56a to the direction to cancel the fastening state. Thus, the lock member 56 is rotated in the direction to separate the engagement projection 56c from the lock plate 54. Consequently, the engagement between the lock member 56 and the lock plate 54 is cancelled, so that the upper jacket 4 becomes possible to move in the telescopic direction (vehicle longitudinal direction) in relation to the lower jacket 3.

With the steering column device 1 according to the above embodiment, the inner edge parts 73b of the guide rails 73 are formed so as to extend along the cylinder-axis direction while abutting on the right side face 56bR and the left side face 56bL of the lock-hole engaging arm part 56b along the cylinder-axis direction, respectively. For this reason, the engagement projection 56c of the lock member 56 is prevented from being shifted to the axial direction of the operating shaft 51 without disturbing the movement of the upper jacket 4 in the cylinder-axis direction and thus, the engagement projection 56c is held in a position enabling it to be engaged with the lock hole 54a of the lock plate 54.

Additionally, the outer edge parts 73a of the guide rails 73 are also formed so as to extend along the cylinder-axis direction while abutting on the marginal parts of the slit 31 along the cylinder-axis direction. Therefore, it is possible to define the circumferential position of the upper jacket 4 in the lower jacket 3 without disturbing the movement of the upper jacket 4 in the cylinder-axis direction.

By arranging the noise reduction parts 74 on the inner faces of the stoppers 71 respectively, it is possible to alleviate impact noise caused by collision of the stopper 71 with the lock member 56 in adjusting the telescopic position of the upper jacket 4.

As the guide member 72 is assembled to the lock plate 54 with the aid of the assembling mechanism 8, it is possible to improve the assembling workability of the guide member 72.

## Claims

1. A steering column device (1), comprising:
a lower jacket (3) having a cylindrical shape and arranged in a vehicle longitudinal direction;
a slit (31) penetrating through a cylinder wall (3a) of the lower jacket (3) along a cylinder-axis direction of the lower jacket (3);
a pair of clamp parts (32) formed so as to stand on both marginal parts of the slit (31);
an upper jacket (4) having a cylindrical shape and inserted into the lower jacket (3) movably in the cylinder-axis direction;
a lock plate (54) fixed on an outer circumferential face of the upper jacket (4) and inserted into the slit (31) movably in the cylinder-axis direction, the lock plate (54) having a plurality of lock holes (54a) opened along the cylinder-axis direction successively;
an operating shaft (51) arranged so as to penetrate through the pair of clamp parts (32);
an operating lever (51a) arranged on the operating shaft (51) to allow the operating shaft (51) to be rotated about an axis of the operating shaft (51);
a cam member (53) arranged on the operating shaft (51) so as to rotate together with the operating shaft (51); **characterised by**
a lock supporting shaft (55) arranged in the pair of clamp parts (32), in parallel with the operating shaft (51);
a lock member (56) rotatably supported by the lock supporting shaft (55) while cooperating with the cam member (53), the lock member (56) being inserted into and removed from the lock hole (54a) in association with the rotating operation of the operating shaft (51);
a pair of stoppers (71) formed so as to stand radially outward from respective ends of the lock plate (54) in the cylinder-axis direction and adapted so as to be capable of abutting on the lock member (56), thereby defining a telescopic-position adjustment range when the upper jacket (4) moves in the cylinder-axis direction; and
a guide member (72) made of resin material and arranged on the lock plate (54) so as to extend in parallel with the cylinder-axis direction, the guide member (72) including a pair of guide rails (73) between which the lock member (56) is pinched in the axial direction of the lock supporting shaft (55), wherein
the rotating operation of the operating lever (51a) about an axis of the operating lever (51a) in a fastening direction allows an interval between the pair of clamp parts (32) to be narrowed, whereby the upper jacket (4) is fastened to the lower jacket(3).

2. The steering column device (1) of claim 1, wherein
the guide member (72) includes noise reduction parts (74) arranged along respective inner faces of the stoppers (71) so as to be abuttable on the lock member (56).

3. The steering column device (1) of claim 2, further comprising
an assembling mechanism (8) including an engagement part (81) provided in the guide member (72) and an engagement receiving part (82) provided in the lock plate (54), wherein
the guide member (72) is assembled to the lock plate (54) since the engagement part (81) is engaged with the engagement receiving part (82).

## Patentansprüche

1. Lenksäulenvorrichtung (1), umfassend:
eine untere Verkleidung (3) mit einer zylindrischen Form, die in einer Fahrzeuglängsrichtung angeordnet ist;
einen Schlitz (31), der eine zylindrische Wand (3a) der unteren Verkleidung (3) entlang einer Zylinderachsenrichtung der unteren Verkleidung (3) durchdringt;
ein Paar von Klemmenteilen (32), die so ausgebildet sind, dass sie auf beiden Randteilen des Schlitzes (31) stehen;
eine obere Verkleidung (4) mit einer zylindrischen Form, die in der Zylinderachsenrichtung beweglich in die untere Verkleidung (3) eingesetzt ist;
eine Verriegelungsplatte (54), die auf einer Außenumfangsfläche der oberen Verkleidung (4) fixiert und in der Zylinderachsenrichtung beweglich in den Schlitz (31) eingesetzt ist, wobei die Verriegelungsplatte (54) eine Vielzahl von Verriegelungsöffnungen (54a) aufweist, die sich in der Zylinderachsenrichtung aufeinanderfolgend öffnen;
eine Betätigungswelle (51), die so angeordnet ist, dass sie das Paar von Klemmenteilen (32) durchdringt;
einen Betätigungshebel (51a), der an der Betätigungswelle (51) angeordnet ist, damit die Betätigungswelle (51) um eine Achse der Betätigungswelle (51) gedreht werden kann;
ein Nockenelement (53), das so an der Betätigungswelle (51) angeordnet ist, dass es sich zusammen mit der Betätigungsfälle (51) dreht;
**gekennzeichnet durch**
eine Verriegelungsstützwelle (55), die in dem Paar von Klemmenteilen (32) parallel zu der Betätigungswelle (51) angeordnet ist;
ein Verriegelungselement (56), das drehbar von der Verriegelungsstützwelle (55) gestützt wird, während es mit dem Nockenelement (53) zusammenwirkt, wobei das Verriegelungselement (56) in die Verriegelungsöffnung (54a) in Verbindung mit der Drehbetätigung der Betätigungswelle (51) eingesetzt und daraus entfernt wird;
ein Paar von Anschlägen (71), das so ausgebildet ist, dass es von jeweiligen Enden der Verriegelungsplatte (54) in der Zylinderachsenrichtung radial nach außen steht und das so angepasst ist, dass es an dem Verriegelungselement (56) anliegen kann und dadurch einen Teleskoppositionsanpassungsbereich definiert, wenn sich die obere Verkleidung (4) in der Zylinderachsenrichtung bewegt; und
ein Führungselement (72) aus einem Kunstharzmaterial, das so an der Verriegelungsplatte (54) angeordnet ist, dass es sich parallel zu der Zylinderachsenrichtung erstreckt, wobei das Führungselement (72) ein Paar von Führungsschienen (73) beinhaltet, zwischen welchen das Verriegelungselement (56) in der axialen Richtung der Verriegelungsstützwelle (55) eingeklemmt ist, wobei
es die Drehbetätigung des Betätigungshebels (51a) um eine Achse des Betätigungshebels (51a) in einer Befestigungsrichtung ermöglicht, einen Abstand zwischen dem Paar von Klemmenteilen (32) zu verkleinern, wodurch die obere Verkleidung (4) an der unteren Verkleidung (3) befestigt wird.

2. Lenksäulenvorrichtung (1) nach Anspruch 1, wobei
das Führungselement (72) Geräuschreduzierungsteile (74) beinhaltet, die entlang jeweiligen Innenflächen der Anschläge (71) angeordnet sind, so dass das Verriegelungselement (56) daran anliegen kann.

3. Lenksäulenvorrichtung (1) nach Anspruch 2, das Weiteren umfassend
einen Montagemechanismus (8), der einen Eingriffsteil (81) beinhaltet, der in dem Führungselement (72) vorgesehen ist, und einen Eingriffsaufnahmeteil (82), der in der Verriegelungsplatte (54) vorgesehen ist, wobei
das Führungselement (72) an der Verriegelungsplatte (54) montiert ist, da der Eingriffsteil (81) mit dem Eingriffsaufnahmeteil (82) in Eingriff steht.

## Revendications

1. Dispositif de colonne de direction (1) comprenant :
une chemise inférieure (3) de forme cylindrique et agencée dans la direction longitudinale d'un véhicule,
une fente (31) pénétrant au travers de la paroi cylindrique (3a) de la chemise inférieure (3) le long de la direction de l'axe de cylindre de la chemise inférieure (3),
une paire de pièces de serrage (32) formées de sorte à se maintenir sur les deux parties marginales de la fente (31),
une chemise supérieure (4) de forme cylindrique et insérée dans la chemise inférieure (3) en pouvant se déplacer dans la direction de l'axe de cylindre,
une plaque de verrouillage (54) fixée sur la face circonférentielle externe de la chemise supérieure (4) et insérée dans la fente (31) en pouvant se déplacer dans la direction de l'axe de cylindre, la plaque de verrouillage (54) comportant une pluralité de trous de verrouillage (54a) ouverts successivement le long de la direction de l'axe de cylindre,
un arbre de manoeuvre (51) agencé de sorte à pénétrer au travers de la paire de pièces de serrage (32),
un levier de manoeuvre (51a) agencé sur l'arbre de manoeuvre (51) afin de permettre la mise en rotation de l'arbre de manoeuvre (51) autour de l'axe de l'arbre de manoeuvre (51),
un élément de came (53) agencé sur l'arbre de manoeuvre (51) de sorte à tourner en même temps que l'arbre de manoeuvre (51), **caractérisé par**
un arbre de support de verrouillage (55) agencé dans la paire de pièces de serrage (32) en parallèle avec l'arbre de manoeuvre (51),
un élément de verrouillage (56) supporté tout en pouvant tourner par l'arbre de support de verrouillage (55) tout en coopérant avec l'élément de came (53), l'élément de verrouillage (56) étant inséré dans le trou de verrouillage (54a) et retiré de celui-ci en association avec l'opération de rotation de l'arbre de manoeuvre (51),
une paire de butées (71) formées de sorte à se maintenir radialement vers l'extérieur depuis les extrémités respectives de la plaque de verrouillage (54) dans la direction de l'axe de cylindre et conçues pour pouvoir venir en butée sur l'élément de verrouillage (56) en définissant ainsi une plage d'ajustement à position télescopique lorsque la chemise supérieure (4) se déplace dans la direction de l'axe de cylindre, et
un élément de guidage (72) constitué d'un matériau de résine et agencé sur la plaque de verrouillage (54) de sorte à se déployer parallèlement à la direction de l'axe de cylindre, l'élément de guidage (72) incluant une paire de rails de guidage (73) entre lesquels est pincé l'élément de verrouillage (56) dans la direction axiale de l'arbre de support de verrouillage (55), dans lequel
l'opération de rotation du levier de manoeuvre (51a) autour de l'axe du levier de manoeuvre (51a) dans la direction de fixation autorise le rétrécissement de l'intervalle entre la paire de pièces de serrage (32), grâce à quoi la chemise supérieure (4) est fixée sur la chemise inférieure (3).

2. Dispositif de colonne de direction selon la revendication 1, dans lequel
l'élément de guidage (72) inclut des pièces de réduction de bruit (74) agencées le long des faces internes respectives des butées (71) de sorte à pouvoir venir en butée sur l'élément de verrouillage (56).

3. Dispositif de colonne de direction selon la revendication 2, comprenant en outre :
un mécanisme d'assemblage (8) incluant une pièce de mise en prise (81) utilisée dans l'élément de guidage (72) ainsi qu'une pièce de réception sur mise en prise (82) utilisée dans la plaque de verrouillage (54), dans lequel
l'élément de guidage (72) est assemblé à la plaque de verrouillage (54) dès lors que la pièce de mise en prise (81) est engrenée avec la pièce de réception sur mise en prise (82).
